Europäisches Patentamt

European Patent Office

Office européen des brevets

(11) Publication number: **0 031 631**
A1

## EUROPEAN PATENT APPLICATION

(21) Application number: **80201250.0**

(22) Date of filing: **30.12.80**

(51) Int. Cl.³: **A 23 L 1/31, A 23 J 3/02, A 23 C 21/00**

(30) Priority: **31.12.79 US 108441**

(43) Date of publication of application: **08.07.81** Bulletin **81/27**

(84) Designated Contracting States: **DE FR GB**

(71) Applicant: **STAUFFER CHEMICAL COMPANY, Westport Connecticut 06880 (US)**

(72) Inventor: **Swartz, William Ewing, 1471 Redfern Drive, Upper St. Clair Pennsylvania 15241 (US)**

(74) Representative: **Urbanus, Henricus Maria, Ir. et al, c/o Vereenigde Octrooibureaux Nieuwe Parklaan 107, NL-2587 BP 's-Gravenhage (NL)**

(54) Protein fortified red meat and process for the preparation thereof.

(57) Protein fortified red meat comprising intact natural skeletal meat having incorporated therein a whey protein fortifier composition having more than about 30% by weight whey protein on a dry solids basis and processes for the preparation thereof.

EP 0 031 631 A1

PROTEIN FORTIFIED RED MEAT
AND PROCESS FOR THE PREPARATION THEREOF

The present invention relates to protein fortification of red meat.

Red meats such as beef, pork, veal, lamb or mutton in the non-comminuted form are utilized extensively in the American diet as a protein source. However, the quantities per consumer have in recent years been lower and the cost of producing a pound of red meat has increased significantly, thus causing a general overall increase in the price of fresh, red meat. Attempts have been made to solve the problem of the availability and high cost of red meats by the introduction of solid protein extenders for use with comminuted meats such as beef. This type of system has not received large scale acceptance due to the flavor problems which naturally are attendant with the soy bean, i.e., the beany flavor. The use of soy isolate as an extender in cured meats such as ham has been advocated in U.S. Patent No. 3,989,851. Various references are known for treating fresh raw meat with milk proteins as binding agents. However, little work has been done in the field of extending fresh, red meat with high quality protein to avoid the cost and availability problems presently attendant in the market place. The price of meat is such that it is now economically feasible to attempt such extension.

THE INVENTION

In accordance with the present invention, red meat in a non-comminuted, uncured form can be extended without affecting the flavor, color, appearance or texture thereof by injecting into the meat or soaking the meat in a whey protein fortifier solution. This invention is particularly applicable to those products which are formed from large pieces of meat termed "sectioned and formed".

DETAILED DESCRIPTION OF THE PRESENT INVENTION

The red meats to be treated in accordance with the present invention include beef, pork, veal, lamb or mutton, as well as wild meat such as venison and preferably beef or pork and more preferably, beef. These meats can be treated immediately after slaughter or at a later date. The age of the meat is not critical.

The protein extender used in the present invention comprises 75-100% of a whey protein concentrate and from about 25-0% of another protein containing source. The protein must be hydratable so that it can be injected or absorbed into the raw meat. The whey protein concentrate is required to have a minimum of about 30% protein with the remainder of the composition being lactose and ash. The optional whey protein source can be either animal or vegetable and can be derived from dairy sources such as milk or whey, or vegetable sources such as soy. When using soy protein as the optional protein source, care must be taken to insure that the protein is properly hydrated. Limited amounts of soy protein should be used to avoid a beany taste.

The whey protein concentrate used in the present invention can be derived from either acid whey or sweet whey as desired. Acid whey is the by-product obtained from the acid coagulation of milk protein by the use of a lactic acid producing bacteria (e.g., lactobacillus) or by the addition of food grade acids such as lactic or hydrochloric acid, i.e., by direct acidification. In either case, acidification is allowed to proceed until a pH of approximately 4.6 is reached. At this pH, casein becomes insolubilized and coagulates as cheese curd. The cheese commonly produced by this method is called "cottage cheese". The whey obtained as a by-product from this method is commonly called "acid" or "cottage cheese whey".

The whey can also be derived from the production of cheddar cheese which is commonly produced by the rennet coagulation of protein. This cheese whey is commonly called "sweet" or "cheddar cheese whey". Whey derived from other cheese manufacturing processes can also be used.

The whey protein concentrate as used in the present invention is most preferably derived from 100% acid cheese whey though minor amounts of other cheese wheys of up to 50% and preferably less than 20% can be used in the preferred form.

The whey protein concentrate must be hydratable or dispersible to the extent of forming an injectable solution. As used herein, the term "hydratable" is intended to include injectable dispersions. Otherwise, the material cannot be injected or absorbed into the meat. Processes which can be utilized to prepare whey protein concentrates in a hydratable form include electrodialysis (Stribley, R.C., Food Processing, Volume 24, No. 1, p. 49, 1963), Reverse Osmosis, Marshall, P.G. et al., Fractionation and Concentration of Whey by Reverse Osmosis, Food Technology 22(a) 696, 1968, Gel Filtration (U.S. Reissue Patent No. 27,806), or Ultrafiltration, Horton, B.S. et al., Food Technology, Volume 26, p. 30, 1972. Chemical methods such as phosphate precipitation as described in Gordon Patent No. 2,388,624 and Melachouris' Patent No. 4,043,990 can be used if the products obtained from those chemical precipitation methods are hydratable.

It has been found that the most effective results have been obtained using an ultrafiltered acid (cottage cheese) whey protein concentrate containing at least about 40% whey protein. In a typical process, cottage cheese whey is neutralized to a pH of about 6.4 with 50% caustic. After storage, the pH is then adjusted to about 7.2 and any solids or precipitates are removed by centrifugal clarification. The clarified liquor is then pasteurized. The liquor is then fed into an ultrafiltration membrane unit. The retentate is condensed and spray dried. Protein products of 35% or more whey protein can be prepared by this process. One of the more preferred products prepared by this process generally comprises from about 40% to about 60% protein based on total Kjeldahl nitrogen, 10-30% lactose, 3-15% ash and 0.1-4% fat. It is preferred to use a product in the dry form to avoid the need for refrigeration though the liquid whey protein concentrate can also be used if desired. As used herein, the term "whey protein concentrate" is also intended to include any of the products prepared by other methods which have a whey protein concentration of at least 30% and which composition is hydratable under the conditions of the meat treatment. It is required that the protein not be denatured or that the lactose salts or any other material in the composition not cause any dissolution problems.

In addition to the whey protein concentrate, the fortifier composition can also contain from about 25% to about 0% of another protein containing composition preferably based on dairy products such as NFDM, dried whey, delactosed whey, delactosed demineralized whey where demineralization is accomplished by any known method such as electrodialysis.

The whey protein fortifier composition can be dissolved in water and the solution used as is or as a vehicle for adding other flavoring agents to the raw meat, such as salt, pepper, spices, herbs and the like, flavor enhancers and other such ingredients. Gelling agents such as gelatin or other ingredients can be added in this manner.

The red meats which can be fortified in accordance with the present invention include pork-derived meats such as pork loins and pork roasts, beef-derived meats such as sirloin, round, brisket, chuck, rump and the like.

The protein fortifier solution can be applied to the meat using any known means for that purpose, such as artery and vein pumping, injection or stitch pumping, osmosis (with or without pumping), dry curing or combinations thereof. The technique utilized will be governed by the meat and the desires of the processor. The meat is preferably massaged or tumbled after pumping, optionally in the presence of additional protein fortifiers or cure solution, to insure even distribution of the fortification solution. The fortifier can be applied to whole sides or small portions, boned or unboned, such as rump roasts, though injection into small pieces is preferable to allow for massaging.

The protein fortifier solution should contain a sufficient amount of protein to allow for convenient application. Fortifier solutions containing in excess of 17% protein are not preferred as they tend to clog the injection systems. Injection solutions containing from about 7% to about 14% protein are preferred. It is preferred to add sufficient protein to the meat to add at least 1% on a dry weight basis of protein to the final product, the percentage being based on the weight of the final fortified and massaged product. It is also preferred to add sufficient protein to supplement the protein content of the green meat by at least about 10%. The upper limit is dictated by the amount that the meat can hold. It is more preferred to add sufficient protein so that the finished meat product will contain at least 90% of the protein concentration of the untreated meat and in an amount sufficient to provide the proper moisture to protein ratio.

The protein fortified meat can be sold in the raw state or cooked and sold in such forms as luncheon meat, or as a sectioned and formed product. A sectioned and formed product is generally prepared by blending intact sections of meat with from about 10% to 25% by weight of the total meat of comminuted meat. The sections of meat can be impregnated with protein fortifier or the final product can be injected. The comminuted portion can be prepared from impregnated meat or ground with or without protein fortifier. The comminuted portion (emulsion) along with appropriate seasonings, water and if desired, protein
fortifier, is blended with the sections and mass
stuffed into suitable casings (10-15 centimeters
diameter). This product can be marketed as such,
fresh, frozen or heat processed and marketed as cooked
meat.

The invention will be more fully illustrated in
the examples which follow.

## EXAMPLE 1

A solution comprising 25% whey protein concentrate (50% whey protein prepared by ultrafiltration
of acid whey) and 75% water and small quantities of
seasoning is injected into trimmed bottom round of
beef using a multiple needle stitch pump. Samples
are prepared using pumps ranging from 10% to 50%
green weight at 10% increase intervals. Effective
results are obtained at 30% pump.

The pumped product is vacuum-packed and sealed
in impermeable packaging for sale. Other samples
which can be sold as roasted or cooked are oven
roasted, steam-cooked and water-cooked.

## EXAMPLE 2

Sections of beef smaller than about 10 centimeters are injected with protein fortifier as in
Example 1. 15% of these sections are chopped in
a silent cutter along with salt, seasoning, water
and whey protein fortifier in amounts sufficient
to form an emulsion. This emulsion is then
thoroughly mixed with the remainder of the meat
sections and stuffed into casings having a diameter of between 10 and 15 centimeters.  After cooking,
the product, a roast beef-whey roll, is ready for
sale.

CLAIMS:

1. Protein fortified red meat comprising intact natural skeletal meat having incorporated therein a whey protein fortifier composition having more than about 30% by weight whey protein on a dry solids basis.

2. The protein fortified red meat as recited in Claim 1 wherein said fortifier composition is used in an amount sufficient to supplement the protein content of the green meat at least about 1%.

3. The protein fortified red meat as cited in Claim 1 wherein said whey protein composition is a whey protein concentrate having from about 40% to about 60% by weight protein.

4. The protein fortified red meat as recited in Claim 1 wherein said whey protein containing fortifier composition is comprised of from about 75% to about 100% of a whey protein concentrate and from about 25% to 0% of another protein substance, said protein being hydratable for incorporation into said meat.

5. A method for protein fortifying intact red meat comprising contacting said intact red meat with a hydrated whey protein concentrate based protein extender comprising from about 75% to 100% whey protein concentrate and from about 25% to 0% of another protein containing material, said whey protein concentrate having more than 30% by weight whey protein on a dry solids basis.

6. The method as recited in Claim 5 wherein all of said extender is whey protein concentrate.

7. The protein fortified red meat as recited in Claim 1 wherein said intact red meat is beef or pork.

8. The method as recited in Claim 5 wherein said intact red meat is beef or pork.

9. The protein fortified red meat as recited in Claim 1 wherein the final product is a sectioned and formed product.

10. The method as recited in Claim 5 wherein the final product is a sectioned and formed product.

## DOCUMENTS CONSIDERED TO BE RELEVANT

| Category | Citation of document with indication, where appropriate, of relevant passages | Relevant to claim |
|---|---|---|
| X | DE - A1 - 2 900 442 (STAUFFER CHEMICAL CO.)<br>* claims 1, 2 and 9; page 9, paragraph 4; page 12, example 1 * | 1,6-8 |
| | US - A - 4 132 809 (N.W. DESROSIER)<br>* claims 1, 4 and 10 * | 1,5,6 |
| D | US - A - 3 989 851 (R.L. HAWLEY et al.)<br>* complete document * | |
| D | US - A - 4 043 990 (N. MELACHOURIS)<br>* complete document * | |
| A | US - A - 4 125 527 (M. BUHLER et al.)<br>* complete document * | |
| A | US - A - 4 032 666 (SH. OBATA et al.)<br>* complete document * | |

**CLASSIFICATION OF THE APPLICATION (Int. Cl.³)**

A 23 L   1/31
A 23 J   3/02
A 23 C  21/00

**TECHNICAL FIELDS SEARCHED (Int. Cl.³)**

A 23 B   4/00
A 23 C  21/00
A 23 J   1/00
A 23 J   3/00
A 23 L   1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| Berlin | 10-03-1981 | SCHULTZE |

EPO Form 1503.1  06.78